# DEMANDE DE BREVET EUROPEEN

(11) **EP 1 319 631 A1**
(43) Date de publication de la demande: **18.06.2003**
(21) Numéro de dépôt: 02364043.6
(22) Date de dépôt: 21.11.2002
(51) Int. Cl.: C02F 11/08, C02F 1/02

(54) **Procédé de traîtement d'effluents contenant des métaux, par oxydation en milieu humide en présence de boues**

(30) Priorité: 13.12.2001 FR 0116170
(71) Demandeur: OTV S.A., 94417 Saint-Maurice Cédex (FR)
(72) Inventeur: Patria, Lucie, 75020 Paris (FR); Luck, Francis, 10777 Berlin (DE); Cretenot, Didier, 60300 Senlis (FR)
(74) Mandataire: Larcher, Dominique

(57) **Abrégé**

L'invention concerne le domaine du traitement des effluents contenant des métaux, provenant notamment mais non exclusivement de diverses activités industrielles ou agricoles.

Le procédé de traitement d'effluents aqueux contenant des métaux ou composés métalliques comprend, selon l'invention, une étape de mélange desdits effluents avec des boues résiduaires provenant de stations d'épuration et au moins une étape d'oxydation par voie humide dudit mélange.

## Description

L'invention concerne le domaine du traitement des effluents.

Plus précisément, l'invention concerne le domaine du traitement des eflluents aqueux contenant des métaux ou des composés métalliques nocifs et/ou indésirables, sous forme dissoute ou particulaire. De tels effluents proviennent principalement, mais non exclusivement, de diverses activités industrielles ou agricoles (tels que les effluents d'ateliers de peinture, les sédiments de dragage, les effluents de tannerie, les effluents de raffinerie, les effluents de parfumerie, les lisiers...).

Au rang des métaux nocifs ou indésirables que l'on retrouve le plus fréquemment dans de tels effluents aqueux, on peut citer le chrome, le nickel, le cobalt, le cadmium, le plomb, le cuivre, l'arsenic, etc... Ces effluents contiennent également fréquemment des composés organiques tels que des hydrocarbures, des solvants, des résines, des polymères, des graisses, des pesticides, ou autres produits chimiques divers.

Des normes de plus en plus sévères s'appliquent aux rejets de métaux dissous ou particulaires, émanant de diverses activités industrielles ou agricoles, dans les réseaux de collecte des eaux usées, prenant en compte le fait que ces métaux se retrouvent finalement concentrés dans les boues résiduaires des stations d'épuration.

La réglementation européenne impose aussi des valeurs limites sur le cuivre, le zinc, le plomb, le mercure, le chrome, le nickel et le cadmium dans les boues destinées à être valorisées en agriculture par épandage sur les terres agricoles.

Ces valeurs limites de ces teneurs sont par exemple de 20 mg/kg de matières sèches pour le cadmium, de 800 mg/kg de matières sèches pour le plomb et de 3000 mg/kg de matières sèches pour le zinc.

De ce fait, les activités génératrices d'effluents contaminés par des métaux doivent soit procéder elles-mêmes à l'élimination des métaux contenus dans leurs effluents, soit confier leurs effluents à des sociétés se chargeant de leur traitement.

Dans l'un ou l'autre cas, les techniques visant à traiter des effluents contaminés par les métaux sont complexes à maîtriser et coûteuses.

Parallèlement, un des traitements performants adaptés à la destruction thermique des boues est l'Oxydation par Voie Humide (ci-après noté OVH).

Cette technique, abondamment décrite dans l'art antérieur, vise à réaliser une oxydation poussée de la matière organique peu biodégradable contenue dans des effluents aqueux, par contact de ces effluents avec un gaz oxydant à température élevée, tout en maintenant les effluents à l'état liquide. Classiquement, les conditions de mise en oeuvre de l'OVH prévoient une température comprise entre 120 °C et 350 °C et une pression comprise entre 5 et 160 bars.

L'OVH est essentiellement destinée au traitement d'effluents chargés en matières organiques, notamment de boues résiduaires, et aboutit, tel que décrit dans le brevet publié sous le n° FR-2 717 460, à un résidu minéral à très faibles teneurs résiduelles en matières organiques, grâce à un recyclage interne des matières solides dans le réacteur d'oxydation.

L'OVH est également utilisée parfois pour effectuer un pré-traitement d'effluents industriels tels que ceux issus de la chimie, pétrochimie et l'industrie pharmaceutique, en vue d'abattre une certaine fraction de leur Demande Chimique en Oxygène (DCO), et surtout pour décomposer les composés susceptibles d'exercer un effet nocif sur la biomasse des bassins de boues activées dans les stations de traitement de tels effluents.

Par ailleurs, l'OVH a été proposée dans le cadre du brevet EP - 844 216 comme méthode de traitement de sols pollués par des composés du chrome. L'extraction du chrome selon cette technique nécessite toutefois de le solubiliser sous forme d'ions bichromates CrO₄⁻ solubles, et doit ensuite être extrait de la liqueur résiduelle par extraction liquide-liquide.

Cette technique ne s'avère efficace que pour le traitement d'effluents peu chargés en matières en suspension. De plus, la DCO du liquide résiduel est augmentée, même si le solvant utilisé est peu miscible.

Cette technique présente également l'inconvénient de nécessiter un solvant (ou extractant), s'avérant souvent être un produit toxique, qui nécessite des conditions de stockage particulières pour répondre aux normes de sécurité en vigueur.

Par ailleurs, le procédé d'extraction liquide-liquide est un procédé onéreux qui nécessite en outre la régénération du solvant, un traitement du concentrat et éventuellement la mise en oeuvre d'un ensemble d'extracteurs en série en fonction des polluants à extraire.

L'OVH a encore été décrite dans la demande de brevet WO - 95 186 87 pour extraire les métaux des sols pollués et des boues résiduaires des stations d'épuration, par oxydation en milieu acide. Selon cette technique, il est nécessaire, après séparation des boues ou sols traités, que la liqueur résiduelle contenant les métaux indésirables soit ensuite alcalinisée, par exemple par ajout de soude, de façon à précipiter les hydroxydes métalliques qui doivent ensuite être éliminés.

Cette technique présente l'inconvénient de nécessiter des matériaux spécifiquement choisis pour le réacteur, les appareils de mesure et les organes annexes, du fait de l'acidité du milieu dans lequel se produit l'oxydation.

En outre, l'oxydation en milieu acide amène des phénomènes de moussage du fait d'un dégazage important et un stockage complémentaire d'acide est à prévoir.

Cette technique présente aussi l'inconvénient de nécessiter d'autres étapes de traitement, telles qu'un lavage, après l'étape d'alcalinisation.

L'invention a donc pour objectif de proposer un procédé de traitement d'effluents aqueux contenant des métaux nocifs ou indésirables qui soient plus facile à maîtriser et moins coûteux que les solutions de l'art antérieur.

Un autre objectif de l'invention est de fournir un tel procédé qui soit adapté au traitement d'effluents qui sont à la fois chargés en composés métalliques et en composés organiques.

L'invention a également pour objectif de fournir un tel procédé qui aboutisse notamment à la formation d'une phase aqueuse contenant des composés aisément biodégradables et d'une phase solide dans laquelle les métaux sont immobilisés et non ou peu lixiviables.

Un autre objectif de l'invention est de fournir un tel procédé qui aboutisse à la formation d'un effluent dont la demande chimique en oxygène (DCO) et la teneur en composés nocifs sont notablement réduites.

L'invention a aussi pour objectif de fournir un tel procédé qui permette d'obtenir un effluent traité qui, s'il est soumis à une lixiviation, ne conduit pas à des lixiviats nocifs

Ces objectifs sont atteints grâce à l'invention qui concerne un procédé de traitement d'effluents aqueux contenant des métaux ou composés métalliques comprenant au moins une étape de mélange desdits effluents avec des boues résiduaires provenant de stations d'épuration et au moins une étape d'oxydation par voie humide dudit mélange.

La Demanderesse a en effet découvert de façon surprenante que le traitement combiné, par OVH, d'effluents contenant des métaux ou composés métalliques nocifs et de boues résiduaires de stations d'épuration, permet de produire, d'une part un effluent aqueux substantiellement débarrassé des métaux ou composés métalliques, et, d'autre part, un résidu solide immobilisant fortement ces mêmes composés métalliques.

On obtient ainsi une technique simple et efficace permettant de minéraliser une partie importante de la matière organique contenue dans lesdites boues et, le cas échéant, dans lesdits effluents aqueux, en produisant une phase gazeuse contenant essentiellement de la vapeur d'eau, de l'azote, de l'oxygène, du dioxyde de carbone, des traces de monoxyde de carbone et des composés organiques volatiles, une phase aqueuse comprenant principalement de la matière organique résiduelle soluble aisément biodégradable, ainsi qu'une phase solide essentiellement minérale immobilisant fortement les métaux et composés métalliques initialement présents dans les effluents aqueux.

Contrairement aux solutions de l'art antérieur, le procédé selon l'invention est donc adapté au traitement d'effluents aqueux à la fois chargés en composés métalliques et en composés organiques.

Préférentiellement, la proportion en poids entre les boues et les effluents aqueux contenant des métaux ou composés métalliques est déterminée en fonction de la teneur en matières volatiles des boues de façon telle que ledit mélange soit auto-combustible. Avantageusement, les boues contiennent entre 50 % et 85 % en poids de matières volatiles.

Selon une solution avantageuse, ledit mélange comprend en poids entre environ 70 % et environ 90 % desdites boues résiduaires. Préférentiellement, ledit mélange comprend en poids environ 70 % desdites boues résiduaires.

Un tel mélange est en effet particulièrement avantageux, car il permet :
- de traiter une quantité importante d'effluents aqueux contenant des métaux ou composés métalliques par rapport au mélange à traiter,
- une réaction d'oxydation exothermique, en particulier à partir de boues présentant une DCO supérieur à 40 g/l,
- d'obtenir une consistance fluide et une composition homogène du mélange.

Préférentiellement, ladite étape d'oxydation par voie humide est réalisée à une température comprise entre environ 150 °C et environ 300 °C et à une pression comprise entre environ 15 bars et environ 160 bars.

Selon une solution avantageuse, ladite étape d'oxydation est réalisée à l'aide d'au moins un gaz oxydant selon un rapport entre ledit gaz oxydant et la demande chimique en oxygène compris entre 0,5 et 2.

Préférentiellement, le gaz oxydant utilisé pour l'étape d'oxydation est de l'oxygène. L'oxygène ainsi utilisé dans de tels rapports permet d'obtenir un abattement de la DCO atteignant 50 % et plus.

Avantageusement, ladite étape d'oxydation est réalisée en présence d'au moins un catalyseur.

Ce catalyseur est destiné à augmenter l'efficacité du procédé, en particulier en ce qui concerne l'abattement de la DCO.

Dans ce cas, ledit catalyseur est ajouté sous une forme soluble auxdites boues résiduaires ou auxdits effluents ou audit mélange.

Selon une solution préférée, ledit catalyseur appartient au groupe comprenant :
- le manganèse,
- le fer,
- le cobalt,
- le nickel,
- le cuivre,
- le zinc, ou,
- les mélanges et composés d'un ou de plusieurs de ces métaux.

Préférentiellement, ledit catalyseur est du sulfate de cuivre.

Avantageusement, le rapport massique dudit catalyseur sur la demande chimique en oxygène dudit mélange est compris entre 5.10⁻⁴ et 3.10⁻¹.

Selon une variante, le procédé comprend une étape préliminaire de tamisage desdits effluents aqueux.

Le procédé est ainsi adapté au traitement d'effluents aqueux pouvant consister en des sédiments contenant des grosses particules minérales, l'élimination de ces dernières évitant de colmater ou de détériorer les organes mécaniques d'une installation d'OVH.

Selon une solution avantageuse, le procédé est réalisé en continu.

Selon une autre solution avantageuse, le procédé est réalisé en discontinu.

Selon une application particulièrement intéressante de l'invention, lesdits effluents aqueux sont des sédiments provenant de dragage de ports.

Le devenir des sédiments de dragage des ports pose en effet problème du fait des fortes teneurs en métaux et en hydrocarbure qu'ils contiennent. Le procédé selon l'invention apporte donc une solution particulièrement avantageuse pour le traitement de ceux-ci.

D'autres caractéristiques et avantages de l'invention apparaîtront plus clairement à la lecture de la description suivante de plusieurs exemples de réalisation de l'invention donnés à titre illustratifs et non limitatifs, en référence aux dessins selon lesquels :
- la figure 1 illustre de façon schématique un réacteur autoclave utilisé dans un traitement OVH ;
- la figure 2 illustre une installation permettant de mettre en oeuvre le procédé selon l'invention en continu.

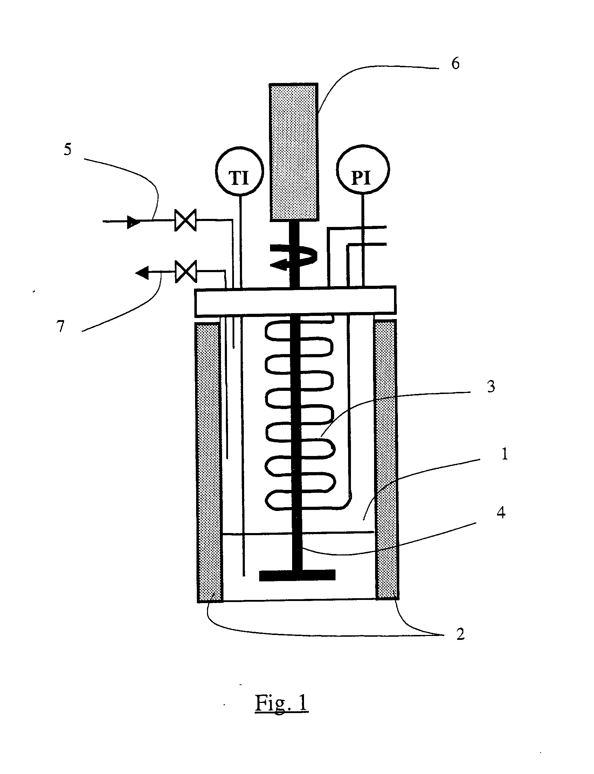

Les différents exemples présentés ci-après ont été effectués à l'aide d'un réacteur autoclave 1 en acier inoxydable tel qu'illustré par la figure 1.

Dans le cadre des essais présentés ci-après, ce réacteur autoclave a été utilisé en discontinu. On notera cependant que, selon d'autres modes de réalisation, et notamment ceux qui seront réalisés à une échelle industrielle, le réacteur pourra fonctionner en continu.

Le réacteur autoclave 1 s'imbrique dans un four annulaire 2 permettant d'obtenir la température de traitement souhaitée.

Un serpentin 3, formant circuit de refroidissement à l'intérieur du réacteur 1, permet de refroidir la boue une fois traitée.

L'agitation est assurée par une canne à arbre creux 4 qui permet en même temps de réinjecter le gaz dans la boue traitée.

### Exemple 1 : Traitement de sédiments de dragage (mélange 30/70 avec des boues).

On réalise un mélange comprenant en poids 70 % de boues pour 30 % d'effluents aqueux contenant du cadmium, du zinc et du plomb, ce mélange étant soumis à une forte agitation manuelle puis magnétique.

Les effluents sont des sédiments de dragage de port, présentant les caractéristiques suivantes :
- siccité : 64,5 %
- matières volatiles sèches (MVS) : 9 %
- cadmium : 123 mg/kg de matières sèches
- plomb : 683 mg/kg de matières sèches
- zinc : 4663 mg/kg de matières sèches

Selon l'homogénéité des sédiments, ceux-ci peuvent nécessiter une opération préalable de tamisage afin d'éliminer notamment les plus gros cailloux.

Les boues utilisées pour les essais sont des boues épaissies provenant d'une station d'épuration et présentant les caractéristiques suivantes :
- matières sèches (MS) : 53,5 g/l
- matières volatiles sèches : 74 %
- DCO totale : 64 g/l
- DCO soluble : 6,5 g/l
- N-NH4 : 180 g/l
- cadmium : 5 mg/kg de matières sèches
- plomb : 79 mg/kg de matières sèches
- zinc : 570 mg/kg de matières sèches

On introduit ensuite le mélange dans le réacteur 1, puis l'oxygène, selon un rapport O₂/DCO de 1,1 g/g, à l'aide de la conduite 5. On met en route l'agitateur 6 à 200 tr/min pour homogénéiser le mélange et on lance le chauffage.

Dès que la température de la réaction est atteinte (235 °C) on augmente l'agitation. Dès lors, l'oxygène de la phase gazeuse est introduit dans la phase liquide via l'arbre d'agitation 4.

Le temps d'agitation (TdC) est de 1 heure, sous une pression de 46 bars. On notera que la pression de travail se situe toujours au-dessus de la pression saturante correspondante à la température de travail.

Une fois le temps de contact atteint, on arrête l'agitateur 6 et le four annulaire 2, puis on refroidit l'autoclave en alimentant en eau le serpentin de refroidissement 3.

Lorsque la température de la boue traitée est inférieure à 50 °C, on dégaze l'autoclave à l'aide de la conduite 7 et on en extrait la boue minéralisée.

Le tableau suivant indique les caractéristiques du mélange avant et après le traitement OVH :

| | Entrée OVH | Sortie OVH |
|---|---|---|
| Matières en suspension en g/l | 206 | 90,7 |
| MVS en % | 19,5 | 7 |
| DCO totale en g/l | 81,3 | 40,5 |
| DCO soluble en g/l | 17,5 | 23,9 |
| N-NH4 en mg/l | - | 1770 |
| pH | 6,46 | 6,1 |

Ces résultats indiquent que l'abattement de DCO est de 50 %, 59 % de la DCO résiduelle étant sous forme soluble.

Le tableau ci-après indique les masses et concentrations de chaque métal dans le mélange (pour 100 g) avant OVH et les masses, concentrations et pourcentage de chaque métal dans la matière solide récupérée après OVH :

| | Entrée OVH (mélange) | | Sortie OVH (matière solide récupérée) | | Pourcentage piégé dans matières solides |
|---|---|---|---|---|---|
| | Masse (mg) | Concentration (mg/kg MS) | Masse (mg) | Concentration (mg/kg MS) | |
| Cadmium | 2,40 | 104 | 2,26 | 280 | 94 |
| Plomb | 13,51 | 585 | 12,92 | 1600 | 95,6 |
| Zinc | 92,36 | 4000 | 74,27 | 9200 | 80,4 |

Les concentrations en métaux de la fraction liquide en sortie OVH sont :
- cadmium : 0,56 mg/l, soit 2,1 % par rapport à la masse de métal introduite
- plomb : < 0,2 mg/l, soit moins de 0,1 % par rapport à la masse de métal introduite
- zinc : 6mg/l, soit 0,6 % par rapport à la masse de métal introduite

La matière solide a été centrifugée pour séparer la phase liquide et effectuer sur celle-ci des tests de lixiviation suivant la norme française AFNOR X 31-210. Les résultats de ces tests figurent dans le tableau ci-dessous :

| | Lixiviat I (mg/kg MS) | Lixiviat II (mg/kg MS) | Lixiviat III (mg/kg MS) | Total (mg/kg MS) | Mâchefers valorsables (mg/kg MS) |
|---|---|---|---|---|---|
| Plomb | < 0,9 | < 0,9 | < 0,9 | - | 10 |
| Cadmium | 0,49 | < 0,36 | < 0,36 | 0,49 | 1 |
| Zinc | 5,58 | 1,6 | 1,26 | 8,54 | - |

Ces résultats indiquent que les métaux initialement contenus dans la boue se concentrent dans la matière solide obtenue par OVH.

En outre, à l'aide du procédé de traitement selon l'invention, la phase liquide de la matière solide obtenue par OVH présente des teneurs en plomb, cadmium et zinc inférieures aux valeurs limites de la circulaire du 05/05/1994 relative aux mâchefers valorisables.

### Exemple 2 : Traitement des sédiments de dragage (mélange 10/90 avec des boues).

Pour cet exemple, on réalise un mélange en poids de 90 g de boues pour 10 g d'effluents aqueux, les boues et les effluents aqueux présentant les mêmes caractéristiques que dans l'exemple précédent.

Les conditions opératoires sont :
- Température : 235 °C
- Pression : 42 bar
- Temps de séjour : 1 heure
- Taux O₂/DCO : 1,1 g/g

Le tableau suivant indique les caractéristiques du mélange avant et après le traitement OVH :

| | Entrée OVH | Sortie OVH |
|---|---|---|
| Matières en suspension en g/l | 94,5 | 32,4 |
| MVS en % | 26 | 12 |
| DCO totale en g/l | 70,6 | 29,3 |
| DCO soluble en g/l | 19,4 | 23,5 |
| N-NH4 en mg/l | - | 1800 |
| pH | 6,46 | 5,7 |

Ces résultats indiquent que l'abattement de DCO est de 58 %, 80 % de la DCO résiduelle étant sous forme soluble.

Comme dans l'exemple précédent, une grande partie de l'azote organique des boues de départ passe sous forme ammoniacale après oxydation.

D'autres caractéristiques et avantages de l'invention apparaîtront encore à la lecture d'une série d'exemples comparatifs d'un procédé de traitement d'un effluent industriel aqueux selon l'art antérieur (exemple 3), et du procédé selon l'invention (exemples 4, 5, 6).

### Exemple 3 : (non représentatif de l'invention)

Selon un exemple de traitement par OVH classique d'un effluent industriel aqueux, on réalise l'oxydation en milieu humide d'un effluent présentant les caractéristiques suivantes :
- DCO : 128 mg/l
- teneur en Cr^{VI} : 562 mg/l
- teneur en Cl⁻ : 42 mg/l

Un volume de 100 ml de cet effluent est placé dans le réacteur autoclave représenté à la figure 1, en présence d'une pression partielle d'oxygène de 3,2 bars, à une température de 235 °C et sous une pression totale de 36 bars, avec un temps de réaction de 60 minutes.

Après refroidissement de l'autoclave et dépressurisation, l'effluent traité est filtré.

L'analyse de la liqueur résiduelle montre une teneur en Cr^{VI} de 479 mg/l. L'abattement de ce paramètre est donc limité à 15%.

Exemple 4 : on réalise l'oxydation en milieu humide d'un mélange comprenant, en volume, 1/3 d'un effluent industriel identique à celui traité dans l'exemple 3, et 2/3 d'une boue de station d'épuration présentant les caractéristiques suivantes :
- matières en suspension : 45 g/l
- matières volatiles : 61 %
- DCO : 48 g/l

Ce mélange présente une concentration en chrome total de 189 mg/l, et est oxydé dans des conditions identiques à celles du procédé selon l'art antérieur.

Après refroidissement de l'autoclave et dépressurisation, l'effluent traité est filtré.

L'analyse de la liqueur résiduelle montre une teneur en Cr^{VI} de 2,1 mg/l. L'abattement de ce paramètre s'élève à 98,9 %.

Ce premier exemple montre donc qu'il est possible, au moyen d'un traitement par oxydation en milieu humide, par exemple dans le cadre d'une station d'épuration des eaux résiduaires, d'éliminer des boues un métal tel que le chrome contenu dans un effluent ajouté dans le réacteur d'OVH.

### Exemple 5 :

Pour cet exemple de traitement à l'aide d'un procédé selon l'invention, on réalise le traitement d'un autre effluent, du même type que celui utilisé dans les deux cas précédents mais contenant une teneur plus élevée de Cr^{VI} de 1515 mg.

On réalise l'oxydation en milieu humide d'un mélange comprenant, en volume, 1/3 de cet effluent et 2/3 d'une boue de station d'épuration présentant les caractéristiques suivantes :
- matières en suspension : 45 g/l
- matières volatiles : 61 %
- DCO : 48 g/l

Ce mélange présente une concentration en chrome total de 505 mg/l, et est oxydé dans des conditions identiques à celles du procédé selon l'art antérieur.

Après refroidissement de l'autoclave et dépressurisation, l'effluent traité est filtré.

L'analyse de la liqueur résiduelle montre une teneur en Cr^{VI} de 0,71 mg/l. L'abattement de ce paramètre s'élève à 99,9 %.

### Exemple 6 :

Selon cet exemple de traitement à l'aide d'un procédé selon l'invention, on réalise le traitement d'un autre effluent présentant les caractéristiques suivantes :
- teneur en arsenic : 45 mg/l
- teneur en cadmium : 2,5 mg/l
- teneur en plomb : 0,11 mg/l
- pH:6,2

On réalise l'oxydation en milieu humide d'un mélange de 33,3 ml de cet effluent avec 66,6 ml d'une boue de station d'épuration présentant les caractéristiques suivantes :
- matières en suspension : 45 g/l
- matières volatiles : 61 %
- DCO : 48 g/l
- teneur en cadmium : 0,45 mg/l
- teneur en plomb : 6,5 mg/l

Ce mélange est oxydé dans des conditions identiques à celles du procédé selon l'art antérieur.

Après refroidissement de l'autoclave et dépressurisation, l'effluent traité est filtré.

L'analyse de la liqueur résiduelle montre les concentrations suivantes en métaux nocifs :

| Elément | Concentration (mg/l) | Taux d'élimination global (%) | Taux d'élimination effluent initial (%) |
|---|---|---|---|
| As | 1,355 | 91,0 | 91,0 |
| Cd | 0,09 | 92,0 | 89,2 |
| Pb | 0,05 | 98,6 | 50,0 |

Ces résultats montrent que moins de 10 % des éléments arsenic, cadmium et plomb sont présents dans la liqueur résiduelle après oxydation. Pour l'arsenic et le cadmium, 90 % de la charge apportée par l'effluent se retrouve éliminée dans le résidu solide provenant de l'oxydation humide du mélange des boues et des effluents.

L'exemple 6 ci-après tend à mettre en évidence l'effet d'un catalyseur dans le procédé selon l'invention par rapport à une OVH sans catalyseur.

### Exemple 6 :

Cet exemple est réalisé avec un mélange composé, en volume de 20% d'un effluent de l'industrie pétrochimique (condensats d'eau en provenance d'un traitement de désufluration d'une raffinerie) et de 80% de boues épaissies urbaines.

Ce mélange présente avant traitement un pH de 7,86 et une DCO totale de 50,9 g/l.

Après traitement OVH sans catalyseur, le mélange présente les caractéristiques suivantes :
- pH:5,38
- DCO totale en g/l : 14,8
- DCO soluble en g/l :13,4
- DCO soluble/DCO totale en % : 90,5

On obtient un abattement de 70,9 % de la DCO.

Après traitement OVH avec catalyseur (le catalyseur utilisé pour cet exemple étant un sel de cuivre), le mélange présente les caractéristiques suivantes :
- pH : 7,38
- DCO totale en g/l : 7,2
- DCO soluble en g/l : 6,4
- DCO soluble/DCO totale en % : 88,9

On obtient avec le catalyseur un abattement de 85,9 %, ce qui démontre une amélioration notable de l'abattement de la DCO d'un traitement OVH avec catalyseur d'un mélange effluents-boues par rapport au traitement OVH sans catalyseur du même mélange.

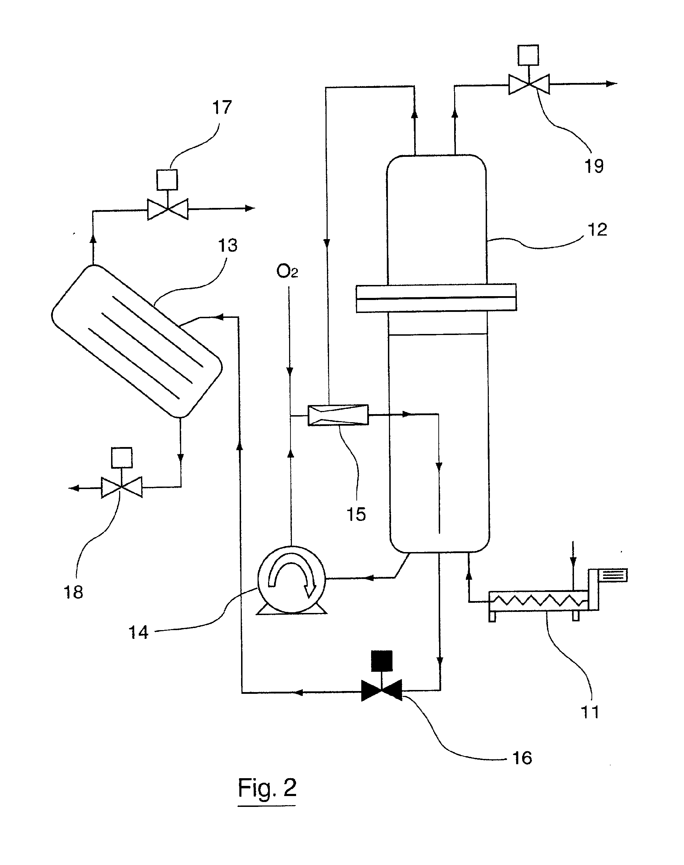

La figure 2 illustre une installation pour réaliser en contenu le procédé selon l'invention.

Cette installation comprend :
- une pompe d'alimentation 11 ;
- un réacteur OVH 12 ;
- un décanteur lamellaire 13 ;
- une pompe de recirculation liquide 14 ;
- un hydroéjecteur 15.

Le fonctionnement de cette installation est décrit ci-après.

La boue à traiter est introduite dans le réacteur OVH 12 à l'aide de la pompe d'alimentation 11.

Dans le même temps, on injecte de l'oxygène (O₂/DCO = 1,1 g/l) et le contenu du réacteur est chauffé jusqu'à atteindre une température de 235°C sous une pression de 44 bar.

La pompe de recirculation liquide 14 permet l'homogénéisation du contenu du réacteur 12 tandis que l'hydroéjecteur 15 aspire la phase gazeuse du réacteur 12 pour améliorer le transfert d'oxygène dans la phase liquide et favoriser ainsi la dégradation de la matière organique.

Une fois les paramètres de fonctionnement atteints, on introduit la boue digérée épaissie dans le réacteur à un débit de 24 l/h puis on ouvre la vanne 16 séparant le réacteur 12 du décanteur 13.

La boue minéralisée sortant du réacteur 12 entre dans le décanteur lamellaire 13 sous pression, qui permet de séparer la surverse (liquide clair) à l'aide de la vanne 17, et la souverse (cendres - technosable) à l'aide de la vanne 18.

La phase gazeuse est extraite du réacteur 12 à l'aide de la vanne 19.

## Revendications

1. Procédé de traitement d'effluents aqueux contenant des métaux ou composés métalliques, **caractérisé en ce qu'**il comprend une étape de mélange desdits effluents avec des boues résiduaires provenant de stations d'épuration et au moins une étape d'oxydation par voie humide dudit mélange.

2. Procédé selon la revendication 1 **caractérisé en ce que** la proportion en poids entre les boues et les effluents aqueux contenant des métaux ou composés métalliques est déterminée en fonction de la teneur en matières volatiles des boues de façon telle que ledit mélange soit auto-combustible.

3. Procédé selon la revendication 2 **caractérisé en ce que** les boues contiennent entre 50 % et 85 % en poids de matières volatiles.

4. Procédé de traitement d'effluents aqueux selon l'une des revendication 1 à 3, **caractérisé en ce que** ledit mélange comprend en poids entre environ 70 % et environ 90 % desdites boues résiduaires.

5. Procédé de traitement d'effluents aqueux selon la revendication 4, **caractérisé en ce que** ledit mélange comprend en poids environ 70 % desdites boues résiduaires.

6. Procédé de traitement d'effluents aqueux selon l'une quelconque des revendications 1 à 5, **caractérisé en ce que** ladite étape d'oxydation par voie humide est réalisée à une température comprise entre environ 150 °C et environ 300 °C et à une pression comprise entre environ 15 bar et environ 160 bar.

7. Procédé de traitement d'effluents aqueux selon l'une quelconque des revendications 1 à 6, **caractérisé en ce que** ladite étape d'oxydation est réalisée à l'aide d'au moins un gaz oxydant selon un rapport entre ledit gaz oxydant et la demande chimique en oxygène compris entre 0,5 et 2.

8. Procédé de traitement d'effluents aqueux selon l'une quelconque des revendications 1 à 7, **caractérisé en ce que** ladite étape d'oxydation est réalisée en présence d'au moins un catalyseur.

9. Procédé de traitement d'effluents aqueux selon la revendication 8, **caractérisé en ce que** ledit catalyseur est ajouté sous une forme soluble auxdites boues résiduaires ou auxdits effluents ou audit mélange.

10. Procédé de traitement d'effluents aqueux selon les revendications 8 ou 9, **caractérisé en ce que** ledit catalyseur appartient au groupe comprenant :
- le manganèse,
- le fer,
- le cobalt,
- le nickel,
- le cuivre,
- le zinc, ou,
- les mélanges et composés d'un ou de plusieurs de ces métaux.

11. Procédé de traitement d'effluents aqueux selon la revendication 10, **caractérisé en ce que** ledit catalyseur est du sulfate de cuivre.

12. Procédé de traitement d'effluents aqueux selon l'une quelconque des revendications 8 à 10, **caractérisé en ce que** le rapport massique dudit catalyseur sur la demande chimique en oxygène dudit mélange est compris entre 5.10⁻⁴ et 3.10⁻¹.

13. Procédé de traitement d'effluents aqueux selon l'une quelconque des revendications 1 à 12, **caractérisé en ce qu'**il comprend une étape préliminaire de tamisage desdits effluents aqueux.

14. Procédé de traitement d'effluents aqueux selon l'une quelconque des revendications 1 à 13, **caractérisé en ce qu'**il est réalisé en continu.

15. Procédé de traitement d'effluents aqueux selon l'une quelconque des revendications 1 à 13, **caractérisé en ce qu'**il est réalisé en discontinu.

16. Procédé de traitement d'effluents aqueux selon l'une quelconque des revendications 1 à 15, **caractérisé en ce que** lesdits effluents aqueux sont des sédiments provenant de dragage de ports.
